# EUROPEAN PATENT APPLICATION

(11) **EP 2 348 477 A1**
(43) Date of publication of application: **27.07.2011**
(21) Application number: 10163771.8
(22) Date of filing: 25.05.2010
(51) Int. Cl.: G06Q 30/00

(54) **Crowdsourcing through mobile network**

(30) Priority: 06.01.2010 IN CH00362010
(71) Applicant: Alcatel Lucent, 75007 Paris (FR)
(72) Inventor: Jaiswal, Sharad, Bangalore 560055, Karnataka (IN); K V M, Naidu, Bangalore 560055, Karnataka (IN); Narlikar, Girija, Mumbai 400001, Maharashtra (IN); Poosala, Viswanath, 560017, Bangalore (IN)
(74) Representative: Sciaux, Edmond

(57) **Abstract**

Crowdsourcing through Mobile Network. The present invention relates to mobile communication networks and, more particularly, to crowdsourcing through mobile communication networks. A method and system for distributing crowdsourcing tasks to target users through at least one mobile communication network. A customer submits a crowdsourcing task to a Crowdsourcing Module (CM); the CM selects the target users, sends the crowdsourcing task to the target users, receives results from the target users and sends the results to the customer. The customer sends a target user profile to the CM and the CM selects the target users by comparing profile of users in the at least one mobile communication network with the target user profile. The customer pays the target users for completing the crowdsourcing task and for availing of crowdsourcing service.

## Description

### TECHNICAL FIELD

The present invention relates to mobile communication networks and, more particularly, to crowdsourcing through mobile communication networks.

### BACKGROUND

Crowdsourcing is a term used to refer to a task being distributed among a group of people. For example, users may be invited to develop an advertisement campaign or to analyze large amounts of data. Internet-based crowdsourcing web-sites attempt to communicate with users through internet-connected Personal Computers (PCs). Many users often have plenty of free time, during which they can complete crowdsourced tasks. However, they may not have easy access to the internet. Even if PCs are occasionally accessible to some users, these internet-based sites cannot reach users in a real-time manner, or the internet-based websites reach users only when the users are in specific locations. The crowdsourcing web-sites cannot complete tasks, such as information about local service providers, within a stipulated time. Thus the users may not be able to complete real-time crowdsourced tasks within the specified time period.

Payments made to users in return for crowdsourced tasks require the user to have a bank account (or else payment is restricted to credits or to material goods, e.g., to purchase of goods online). Therefore these services are well out of reach of users who do not have bank accounts or users who do not wish to divulge their bank account details and to users who have no access to PCs or to the internet. Also, if users are given prizes or credits then the users do not have the option of choosing a mode of payment that would satisfy their needs.

Current crowdsourcing systems do not have the option of knowing the complete profile of users and distributing tasks among a selected group of users. For example, if a survey has to be completed by businessmen in a particular location, then there is no way to select businessmen in the required location and distributing the task only to the selected businessmen. Also, it may not be able to determine when a user is available and when a user is not available before sending the task to the user. The cost of distributing tasks and collecting results may exceed the value added by the crowdsourcing service.

Current crowdsourcing systems do not know when the network is under-loaded and hence are unaware of the right time to send non-real time tasks or collect the results. Communicating during times of high network load can be expensive, and can disrupt other, higher-priority real-time traffic.

### SUMMARY

In view of the foregoing, an embodiment herein provides a method for distributing crowdsourcing tasks to target users through at least one mobile communication network. A customer submits a crowdsourcing task to a Crowdsourcing Module (CM); the CM selects the target users, sends the crowdsourcing task to the target users, receives results from the target users and sends the results to the customer. The customer communicates with the CM using a communication terminal and the customer communicates to the CM using at least one of Short Message Service (SMS), Cellular Data Service, Unstructured Supplementary Service Data (USSD), Multimedia Messaging Service (MMS), Phone, Internet, in person and Interactive Voice Response (IVR). The customer sends a target user profile to the CM and the CM selects the target users by comparing profile of users in at least one mobile communication network with the target user profile. The CM filters the results received from the target users and sends the filtered result to the customer. The customer pays the CM and the CM distributes a pre-determined percentage of the fees to the target users. The CM communicates with the target users using at least one of Short Message Service (SMS), Cellular Data Service, Unstructured Supplementary Service Data (USSD), Multimedia Messaging Service (MMS), Phone, Internet, in person and Interactive Voice Response (IVR).

Embodiments further disclose a Crowdsourcing Module (CM) for distributing crowdsourcing tasks to target users through at least one mobile communication network. The CM receives a crowdsourcing task from a customer, selects the target users, sends the crowdsourcing task to the target users, receives results from the target users and sends the results to the customer. The customer communicates with the CM using a communication terminal. The CM is adapted to receive a target user profile from the customer and the CM selects the target users by comparing profile of users in the at least one mobile communication network with the target user profile. The CM filters the results received from the target users and sends the filtered result to the customer. The CM receives a fee from the customer and distributes a pre-determined percentage of the fee to the target users.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a block diagram of a crowdsourcing module connected to an operator network, according to an embodiment herein;

FIG. 2 illustrates a block diagram of a crowdsourcing module, according to an embodiment herein;

FIG. 3 is a flowchart depicting a method for distributing a crowdsourcing task to target users, according to an embodiment herein;

FIG. 4 is a flowchart depicting a method for testing an application through crowdsourcing, according to an embodiment herein;

FIGS. 5a and 5b are flowcharts depicting a method for locating a service provider through crowdsourcing, according to an embodiment herein; and

FIG. 6 is a flowchart depicting a method for developing an advertisement campaign through crowdsourcing, according to an embodiment herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

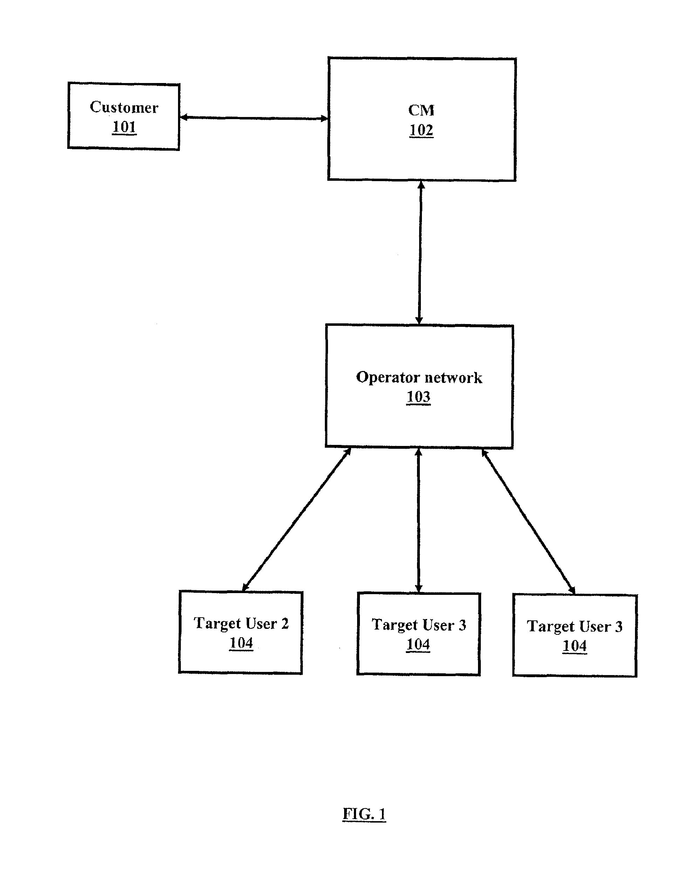

The embodiments herein disclose method and system for distributing crowdsourcing tasks to mobile users by having a wireless network operator distribute the tasks to mobile users. Referring now to the drawings, and more particularly to FIGS. 1 through 6, where similar reference characters denote corresponding features consistently throughout the figures, there are shown embodiments.

FIG. 1 illustrates a block diagram of a crowdsourcing module connected to an operator network. A customer 101 can use a Crowdsourcing Module (CM) 102 to distribute crowdsourcing tasks to target users 104 and obtain results of completed tasks. For example, the customer 101 may submit questions for a survey that have to be answered by a group of target users. In a second example, the customer 101 may want a new application to be tested for bugs and performance by cell phone users. In a third example, the customer 101 may want to avail of any service and may want information about service providers from target users 104. After creating the task, the customer 101 submits the task to the CM 102 using a communication terminal. For example, the communication terminal may be a cell phone or a laptop. If the task is a survey then the questions for the survey may be compiled on the communication terminal. The task may be submitted to the CM 102 by a suitable communications means such as Short Message Service (SMS), General Packet Radio Service (GPRS), Unstructured Supplementary Service Data (USSD), Multimedia Messaging Service (MMS), through the Internet and any other cellular data services. The task may also be submitted over a phone call to a specified number. The task may also be submitted in person at a kiosk or at specified customer centers. The tasks may also be submitted through an Interactive Voice Response (IVR). Along with the task, the customer 101 may also specify the profile of the target users 104 and the price that the user is willing to pay for getting the task done. The profile of the target users 104 may include details such as age of the target users 104, qualification, spending habits, occupation, location and any other characteristic or attribute that can identify a user. The pricing of the task may be the payment offered by the customer 101 to target users 104 for completing the task and to the CM 102 for distributing the task and obtaining the results. For example, the customer 101 may submit a survey to be completed by target users 104 who are engineers living in a particular city and who are in the age group of 25 to 30 years. The customer 101 may offer a payment to target users 104 who complete the survey and submit the answers.

The CM 102 receives the specified task, profile information of target users 104, pricing details of the task and any other task related detail or information from customers 101. On receiving the profile of the target users 104 from the customer 101, the CM 102 compares the profile with the stored details of the subscribers of the operator network 103 and based on the comparison the CM 102 determines the target users 104. The CM 102 may have communication links with multiple operator networks 103 and may access the details of the users in all the connected operator networks 103. The details of the users may be stored in a database in the operator networks 103. The CM 102 can access the details of the users stored in the database. The details may be stored in a single database in the operator networks 103 or the details may be stored in multiple databases in the operator networks 103. The CM 102 may also access multiple databases in the operator networks 103 to obtain all the required details of the users. The details of users present in the operator network may include the age, gender, location, qualification, occupation, spending habits, traveling habits and any other identifying characteristic or attribute of the target users 104. For example, if the profile required by the customer 101 is: all male subscribers in the age group 25-30, then the CM 102 searches for all male users in the age group 25-30 in the stored details of the subscribers. On locating the details of all male users in the age group 25-30, the CM 102 designates the located subscribers as target users 104. After designating the target users 104, the CM 102 distributes the task to the target users 104 through the operator network 102. If the target users 104 send the results to the CM 102, the CM 102 collates the results, and sends the results to the customer 101. The target users may send the results to the CM 102 using the operator network. The CM 102 may also filter the results before sending the result to the customer 101. For example, if target users 104 have submitted answers to a question, the CM 102 may select only the best replies and send the selected result to the customer 101. In a second example, the target users 104 may have sent multiple copies of the result, and then the CM 102 filters the results to eliminate all duplicates of the result. The results are sent to the CM 102 through the operator network 103. For example, the results may be sent by SMS, MMS, GPRS, USSD, through the internet or through any other cellular data services. The results may also be sent through an IVR. The results may also be sent over a phone call to a specified number. The results may also be sent in person at a kiosk or at specified customer centers. After the results have been submitted, the customer 101 may pay the target users 104 for having completed the task. For example, the payment may be in the form of the target users 104 being given extra credit using which the target users 104 may use network resources or make purchases online. The customer 101 may also make a payment to the CM 102. The payment may be in the form of money and can be done using a credit card, direct bank transaction or any other suitable mode of money transfer.

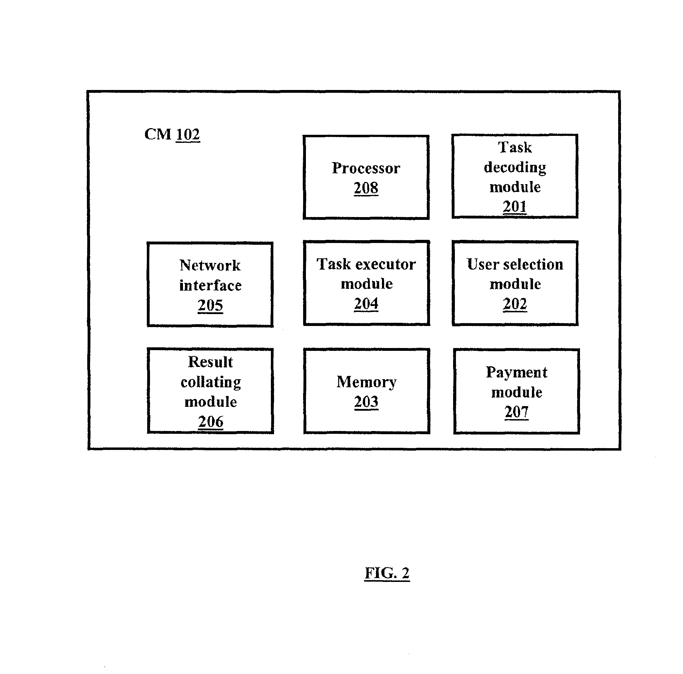

FIG. 2 illustrates a block diagram of a crowdsourcing module. A customer 101 can use a Crowdsourcing Module (CM) 102 to distribute crowdsourcing tasks to target users 104 and obtain results of completed tasks. After creating the task, the customer 101 submits the task to the CM 102 using a communication terminal. For example, the customer 101 may use a web interface to create and submit the task as a series of questions. The questions can be of various types, can include multimedia and the order or subset of questions can depend on the responses from the respondents. The web interface could encode this task specification into some intermediate format such as XML and submit this task to the CM 102 to store. Along with the task, the customer 101 may also specify the profile of the target users 104, the number of target users 104 needed, and the pricing of the task. The CM 102 receives the data sent by the customer 101 using a network interface 205. The network interface 205 is also used to send data to and receive data from different operator networks 103. On receiving a task, the decoding module 201 determines the type of task specified by the customer 101. For example, the task specified by the customer 101 may be a survey or a query to locate a particular service provider, such as an insurance provider, in a particular geographical area. The task decoding module 201 also determines other parameters and target user 104 profiles specified by the customer 101. For example, the customer 101 may specify a deadline for completing the task. After determining the profile of the target users 104, the task decoding module 201 sends the profile of the target users 104 to a user selection module 202. The user selection module 202 gets the details of the subscribers from the operator network 103. On obtaining details of subscribers, the user selection module 202 compares the details of the subscribers with the profile requirements of the customer 101. Based on the comparison, the user selection module 202 determines the target users 104 for completing the task. The user selection module 202 then sends the list of target users 104 to a task executor module 204. The task executor module 104 sends the specified task to the selected target users 104 through the network interface 205 and the operator network 103. The task executor module 104 sends the task and ensures that all parameters specified by the customer 101 have been fulfilled while the task is being done. For example, if the user has been a time limit for completing the task, then the task executor module 104 ensures that the task is completed before the expiry of the time period. After a task has been assigned to a target user 104, the task executor module 104 stores a status for the target user 104 in the memory 203 to indicate the stage of progress of the task. For example, after sending the task to a target user 104, the status of the task for the target user may be "Sent" and after the target user 104 sends the result, the status may be changed to "Completed".

After completing the task, the target user 104 may send the result to the CM 102 through the operator network 103. On receiving the result, a result collating module 206 collates and processes the results and if required, filters the results. The result collating module 206 may then rank the results, filter the results for quality or correctness, or send only those results that are above a pre-determined rank to the customer 101. The results of the task may also be stored in the memory 203. After the task has been completed and the status of the task for a particular target user 104 indicates that the target users 104 have completed the task, then a payment module 207 pays the target user 104 for completing the task, as per the directions of the customer 101. The payment module 207 may also collect a fee from the customer 101 for providing the services. A processor 208 controls the operation of the CM 102. In other embodiments, the CM 102 may be a server distributing the tasks, obtaining the results, collating the results, sending the results to the customers 101, receiving payments from customers 101 and distributing payments to the target users 104.

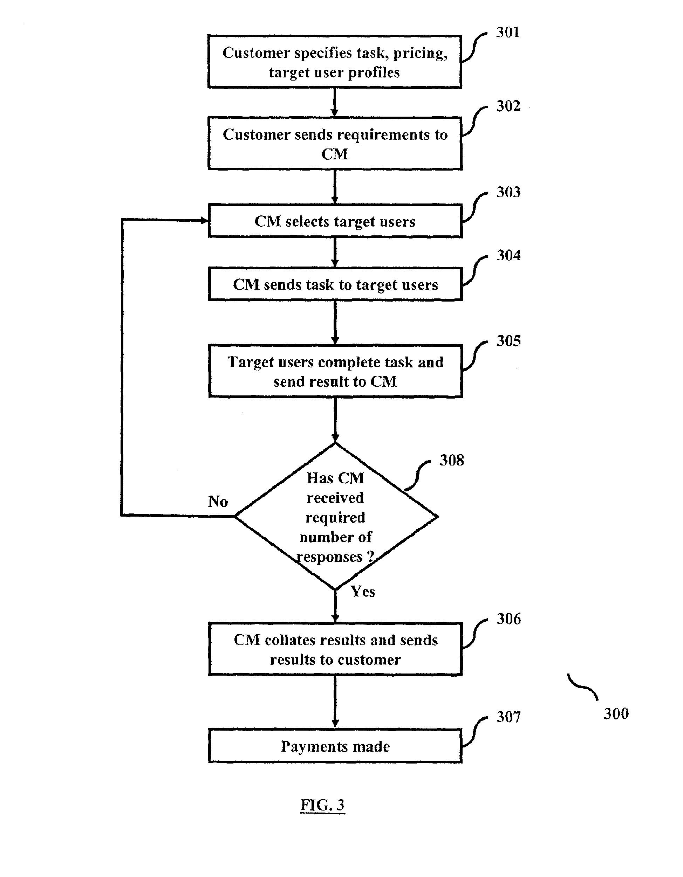

FIG. 3 is a flowchart depicting a method for distributing a crowdsourcing task to target users. The customer 101 specifies (301) the task and submits (302) the task to the CM 102 using a communication terminal. Along with the task, the customer 101 may also specify the profile of the target users 104 and the pricing of the task. On receiving the profile of the target users 104 from the customer 101, the CM 102 compares the profile with the stored details of the subscribers of the operator network 103 and based on the comparison the CM 102 determines (303) the target users 104. After determining the target users 104, the CM 102 distributes (304) the task to the target users 104. On receiving the task, the target users 104 complete the task and send (305) the result to the CM 102. The CM 102 collates the results, and sends (306) the results to the customer 101. If sufficient responses are not received (308), the CM 102 may send the task to additional target users 104. The CM 102 may also filter the results before sending the result to the customer 101. After the results have been submitted, the customer 101 makes (307) the payment for having used the crowdsourcing services and to the target users 104 for having completed the task. The various actions in method 300 may be performed in the order presented, in a different order or simultaneously. Further, in some embodiments, some actions listed in FIG. 3 may be omitted.

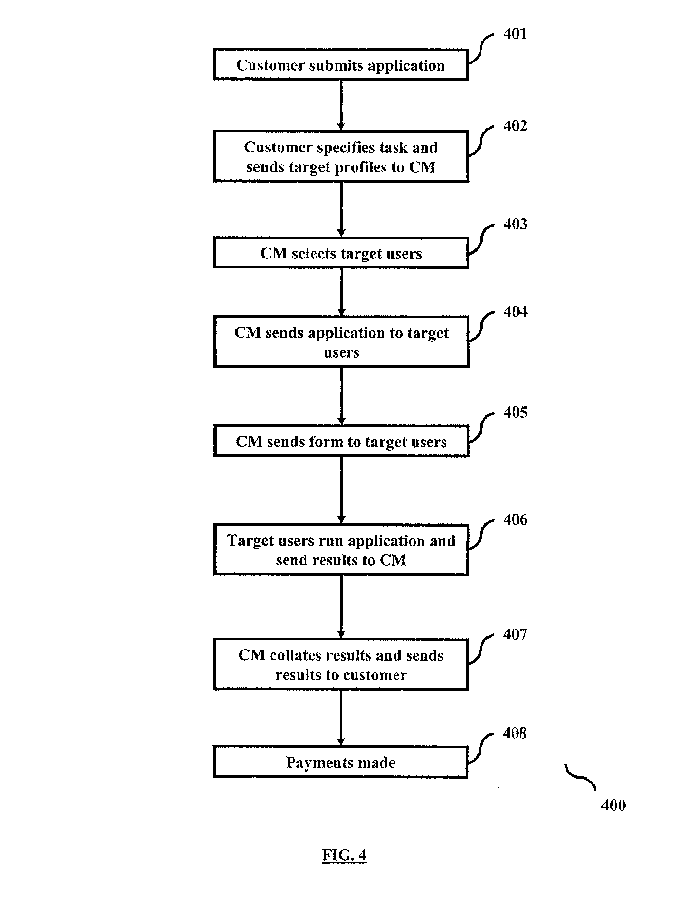

FIG. 4 is a flowchart depicting a method for testing an application through crowdsourcing. When a customer 101 develops a new application, the customer 101 may want to test the application before the application is offered for sale. For example, a customer 101 may have developed a game intended to be played on cell phones. The application may need to be tested for bugs, usability on different communication terminals, to ensure that the application is not taking a high percentage of resources on the communication terminal, to ensure that the application runs with the desired performance on different types of communication terminals or to ensure that the application meets all the desired performance requirements. To test the application through crowdsourcing, the customer 101 develops the application and sends (401) the application to the CM 102. For example, the application may be uploaded to the CM 102 by the customer 101 over a web interface; several instances of the application may be uploaded, wherein each application may be intended for a particular type of communication terminal. The customer 101 then specifies the type of testing that he needs to be performed on the application, the target communication terminals and the target profile and sends (402) the testing information and target profile to the CM 102. For example, the customer 101 may develop an application to edit documents and may want to know if the application is able to edit documents in various formats on all smart phones. Here the task specification is the determination of whether the application is able to edit documents in various formats and the target users 104 are all users having smart phones. The customer 101 may also want the target users 104 to rate the application along various metrics such as speed, usability, usefulness, and any other metric. On receiving the application, task specification and target profile, the CM 102 gets the details of the subscribers from the operator network 103 and compares the details with the target profile. Based on the comparison, the CM 102 selects (403) the target users 104. After selecting the target users 104, the CM 102 sends (404) the application to the target users 104 through the operator network 103. The operator network 103 has some control over the target users' 104 communication terminal through the Subscriber Identity Module (SIM) card. The application could be run on the SIM card through a SIM application toolkit. Operator networks 103 can update or change data or applications on the SIM card by sending data or application to the SIM card using Over-The-Air (OTA) technology. The application submitted by the customer 101 may be sent to the SIM card in communication terminals through operator networks 103 using OTA technology. The application is downloaded onto the communication terminal through the SIM card in the communication terminal. The application can then be tested on the communication terminal by the target users 104. In other embodiments, a menu item may be added or updated in the existing SIM application to indicate availability of a new task. The task may then be downloaded over the operator network 103 if and when the target user 104 is willing to complete the task.

After sending the application to target users 104, the CM 102 sends (405) a form to the target users 104. Target users 104 can use the form to provide feedback about the application on the communication terminal. For example, if any target user 104 comes across a bug in the application, the target user 104 can report about the bug using the form. On receiving the application and the form, target users 104 may run the application, fill the form and send (406) the results to the CM 102 through the operator network 103. The application may also comprise of a feedback mechanism, whereby the operations and steps taken by the user are communicated to the CM 102. The feedback mechanism may be automatic or initiated by the user. The CM 102 collates the results, and sends (407) the results to the customer 101. The CM 102 may also filter the results before sending the result to the customer 101. After the results have been submitted, the customer 101 pays (408) for having used the crowdsourcing services and the target users 104 for having completed the test of the application. The various actions in method 400 may be performed in the order presented, in a different order or simultaneously. Further, in some embodiments, some actions listed in FIG. 4 may be omitted.

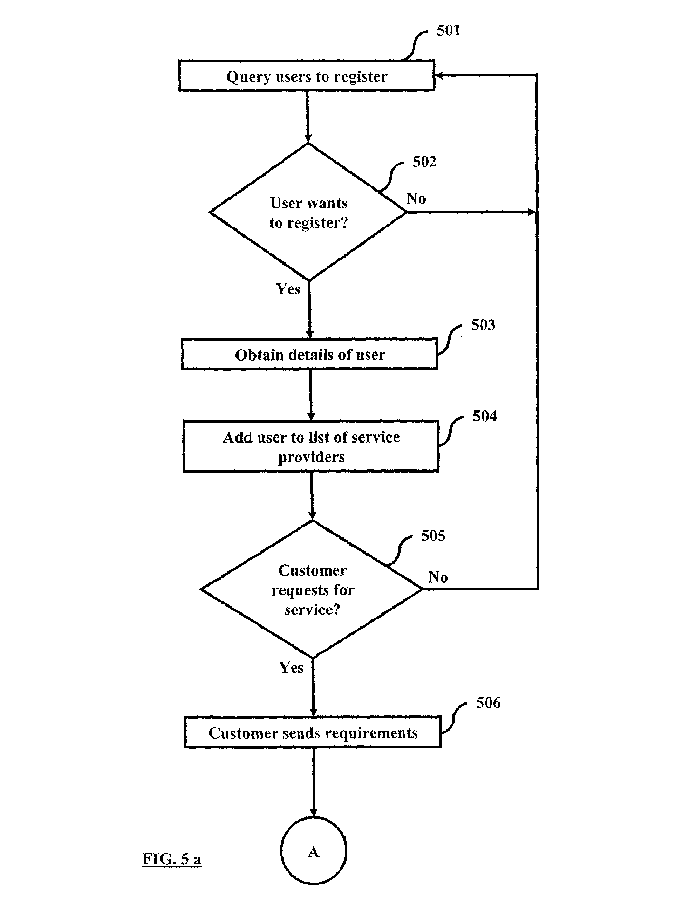

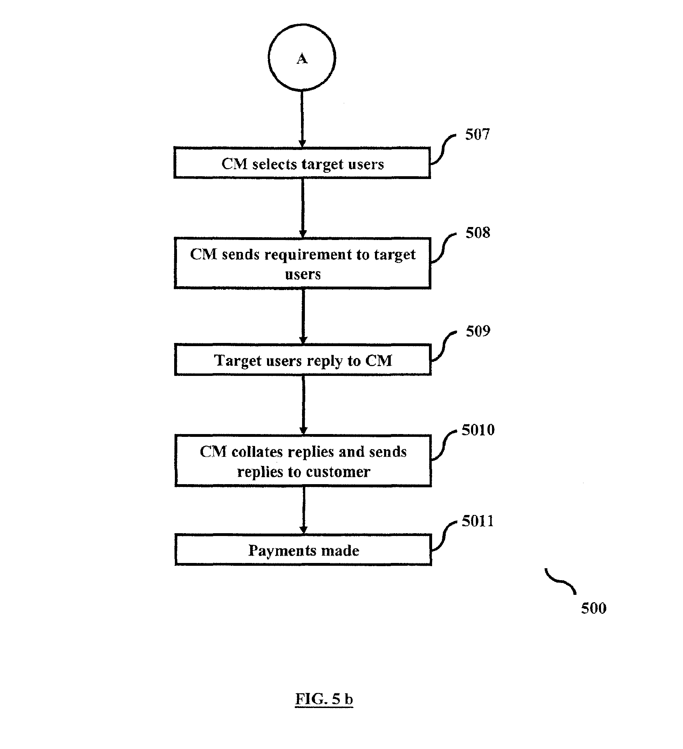

FIGS. 5a and 5b are flowcharts depicting a method for locating a service provider through crowdsourcing. The customer 101 may want to avail of any service being offered by service providers. The customer 101 may not be aware of the best service provider or the service provider who would meet every requirement of the customer 101. The customer 101 can locate the service provider meeting every requirement of the customer 101 through crowdsourcing. For example, the customer 101 may want to locate an insurance agent for taking insurance. To locate the appropriate service provider through crowdsourcing, the CM 102 should have a list of service providers. To create a list of service providers, the CM 102 sends (501) a query to all users, through the operator network 103, to register their services. If any user wants to register (502), then the CM 102 obtains (503) details about the user and the service provided by the user. For example, the details obtained from the user may be information about the service provided by the user, location and the fee charged by the user. The CM 102 adds (504) the user to a list of service providers and stores the list in the memory 203.

If the customer 101 wants to avail (505) of any service, the customer 101 sends the requirement to the CM 102. The requirement would specify the type of service required and any other constraint that has to be satisfied by the service provider and send (506) the requirement to the CM 102. For example, the customer 101 may want to consult a doctor in a particular city between 4:00 PM and 6:00 PM. On receiving the requirement, the CM 102 refers to the list of service providers and selects (507) target users 104 satisfying the requirements specified by the customer 101. The CM 102 then sends (508) the requirement to the selected target users 104 through the operator network 103. On receiving the requirement, the service provider may decide to reply to the requirement, by sending (509) a reply to the CM 102. The CM 102 collates all the results, and sends (5010) the results to the customer 101. The CM 102 may also filter the results before sending the result to the customer 101. After the results have been submitted, the customer 101 pays (5011) for having used the crowdsourcing services and the target users 104 for having completed the test of the application. The various actions in method 500 may be performed in the order presented, in a different order or simultaneously. Further, in some embodiments, some actions listed in FIG. 5 may be omitted.

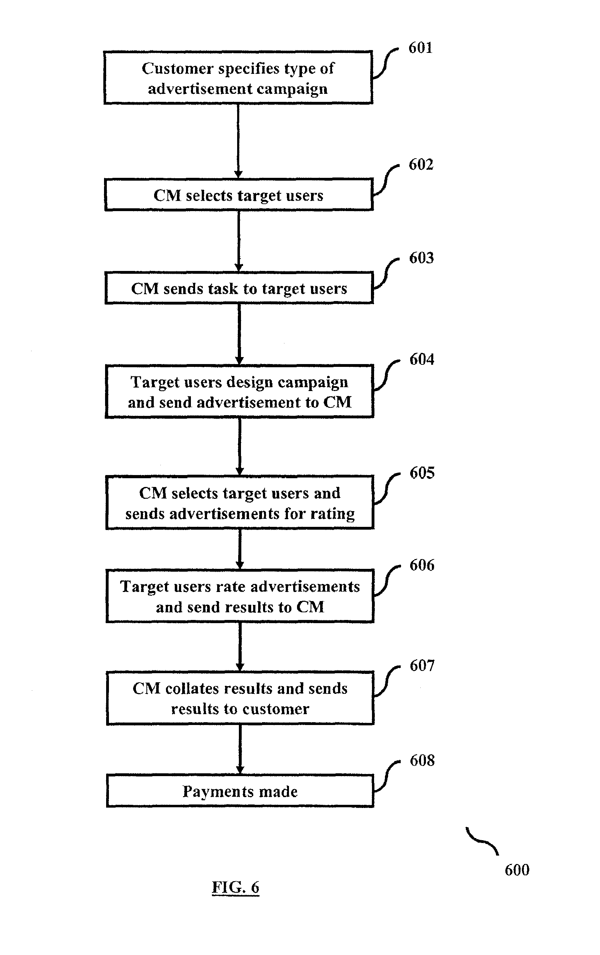

FIG. 6 is a flowchart depicting a method for developing an advertisement campaign through crowdsourcing. A customer 101 may want to develop an advertisement for a business through crowdsourcing by having target users 104 develop the advertisement for the business. The customer 101 specifies (601 the kind of advertisement required and any other requirement that has to be satisfied by the advertisement and sends the task requirement to the CM 102. For example, the task requirement may be the market to be targeted through the advertisement and the duration of the advertisement. The CM 102 selects (602) the target users 104 by going through the profile of users obtained from the operator network 103. After selecting the target users 104, the CM 102 sends (603) the task to the target users 104 through the operator network 103. On receiving the task and the requirements of the task, the target users 104 may decide to complete (604) the task and develop an advertisement campaign according to the requirements of the customer 101. Target users 104 send the completed task to the CM 102 through the operator network 103.

The CM 102 may have multiple completed advertisement campaigns developed by multiple target users 104. The CM 102 then seeks to rate the advertisement campaigns by having target users 104 rate the multiple advertisement campaigns. For example, the target users 104 selected for rating the advertisement campaigns may all users having multimedia phones. After selecting the target users 104, the CM 102 sends (605) the advertisement campaigns to the target users 104 through the operator network 103. On receiving the multiple advertisement campaigns, the target users 104 may decide to view the advertisement campaigns and rate (606) the advertisement campaigns. For example, the target users 104 may rate the advertisement campaigns based on the effectiveness of the advertisement campaigns in conveying information to the intended viewers. The target users 104 then send the ratings to the CM 102 through the operator network 103. The CM 102 collates the results, and sends (607) the results to the customer 101. The CM 102 may also filter the results before sending the result to the customer 101. For example, the CM 102 may send the advertisement campaigns having average rating 1 and 2 to the customer 101. After the results have been submitted, the customer 101 pays (608) for having used the crowdsourcing services and the target users 104 for having completed the task. The customer 101 may choose to select a desired number of advertisement campaigns from among the multiple advertisement campaigns developed by the target users 104. The customer 101 would also pay the target users 104 whose advertisement campaign was selected by the customer 101. For example, if the customer 101 selects the advertisement campaigns rated 1 and 2, then the customer 101 pays the target users 104 who developed the selected advertisement campaigns. The various actions in method 600 may be performed in the order presented, in a different order or simultaneously. Further, in some embodiments, some actions listed in FIG. 6 may be omitted.

Embodiments described herein, allow a customer 101 to reach a large number of diverse users with varied profiles spread over large geographical areas. The CM 102 can know when target users 104 are available and when target users 104 are not available and target users 104 can receive and complete tasks anywhere and at any convenient time. Target users 104 could be reached in real-time and tasks could be made simple to install and complete and target users 104 could be seamlessly paid for the work. In case of non-real-time tasks, the CM 102 can schedule task distribution and result collection based on current load in the operator's network. Users who do not have a bank account or are apprehensive about divulging their bank account details can also be paid for their work through credits added to their mobile subscription for using network resources. An Intelligent Network (IN) server may also be used for making payments to the target users 104.

The CM 102 can act as an interface between different operator networks 103 and allow crowdsourcing tasks to be distributed among users of different networks. If details of users have been stored on multiple servers, then the CM 102 can obtain all details from multiple servers and combine all details. Thus the customer 101 can specify more details about the profile of target users 104. Also, users may rate the results sent by target users and the rating may be used for future selection of target users. The crowdsourcing task as well as the result may also be compressed and data transmissions scheduled in such as manner as to reduce network overheads. For example, non-real time tasks and responses can be buffered and transmitted during night, when there is lesser load on the network. Real time responses can be compressed and piggybacked over other real-time user traffic. Thus cost of sending crowdsourced tasks and receiving results could be reduced. The cost of distributing tasks and collecting results would then be lesser than the value added by the service.

The CM 102 allows the customer 101 to specify the task in a very simple, high-level manner. The CM 102 allows the customer 101 to focus on the content of the task rather than the way the task is presented to the target user 104 or the way results are collected. The CM 102 allows customization of simple menu-based interfaces, multimedia interfaces such as audio, video, text to communicate with the users, the medium to send tasks or to receive replies, specification of deadlines for completion and ways of collating results of the task. For example, a simple web API can help the customer design a user survey, with dynamic, WYSIWYG pages for easy customization and input of survey questions, including multiple choice or free-form questions, nested questions, multimedia questions, etc. The web interface could also simulate to the customer 101 how the task would appear to the target users 104.

The same task could be run on different types of communication terminals, for example different types of mobile handsets. Hence the crowdsourced task could be made accessible to different kinds of target users making the crowdsourced service scalable to a very large number of users. The operator network 103 has some control over the target users' 104 communication terminal through the SIM card. Customers 101 can test applications by having target users 104 download the application to communication terminals through the SIM card. The download is initiated through an application in the SIM card and the downloaded application may be installed on the communication terminal. The installed application can then be tested by the target user 104.

The embodiments disclosed herein can be implemented through at least one software program running on at least one hardware device and performing network management functions to control the network elements. The network elements shown in Fig. 1 and Fig. 2 include blocks which can be at least one of a hardware device, or a combination of hardware device and software module.

The embodiment disclosed herein specifies a system and method for distributing crowdsourcing tasks to mobile users. The mechanism allows a customer 101 to distribute crowdsourcing tasks to target users 104 through a mobile communication network providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) or another coding language, or implemented by one or more VHDL or several software modules being executed on at least one hardware device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means or at least one microprocessor and at least one memory with software modules located therein. The method embodiments described herein could be implemented in pure hardware or partly in hardware and partly in software. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

**1.** A method for distributing crowdsourcing tasks to target users through at least one mobile communication network, said method comprising steps of
a customer submitting a crowdsourcing task to a Crowdsourcing Module (CM);
said CM selecting said target users;
said CM sending said crowdsourcing task to said target users; and
said CM receiving results from said target users and sending said results to said customer.

**2.** The method, as claimed in claim 1, wherein said customer communicates with said CM using a communication terminal.

**3.** The method, as claimed in claim 1, wherein said customer communicates to said CM using at least one of
Short Message Service (SMS);
Cellular Data Service;
Unstructured Supplementary Service Data (USSD);
Multimedia Messaging Service (MMS);
phone;
Internet;
personally; and
Interactive Voice Response (IVR).

**4.** The method, as claimed in claim 1, wherein said customer sends a target user profile to said CM.

**5.** The method, as claimed in claim 1, wherein said CM selects said target users by comparing profile of users in said at least one mobile communication network with said target user profile.

**6.** The method, as claimed in claim 1, wherein said CM filters said results received from said target users and sends said filtered result to said customer.

**7.** The method, as claimed in claim 1, wherein said method further comprises steps of
said customer making a payment to said CM; and
said CM distributing a pre-determined percentage of said fees to said target users.

**8.** The method, as claimed in claim 1, wherein said CM communicates with said target users using at least one of
Short Message Service (SMS);
Cellular Data Service;
Unstructured Supplementary Service Data (USSD);
Multimedia Messaging Service (MMS);
phone;
Internet;
personally; and
Interactive Voice Response (IVR).

**9.** A Crowdsourcing Module (CM) for distributing crowdsourcing tasks to target users through at least one mobile communication network, said CM comprising at least one means adapted for
receiving a crowdsourcing task from a customer;
selecting said target users and sending said crowdsourcing task to said target users; and
receiving results from said target users and sending said results to said customer.

**10.** The CM, as claimed in claim 9, wherein said CM is adapted to receive a target user profile from said customer.

**12.** The CM, as claimed in claim 9, wherein said CM is adapted to select said target users by comparing profile of users in said at least one mobile communication network with said target user profile.

**13.** The CM, as claimed in claim 9, wherein said CM is adapted to filter said results received from said target users and sends said filtered result to said customer.

**14.** The CM, as claimed in claim 9, wherein said CM is adapted to receive a fee from said customer and distributing a pre-determined percentage of said fees to said target users.

## Amended claims

### Amended claims in accordance with Rule 137(2) EPC.

**1.** A method for distributing crowdsourcing tasks to target users (104) through at least one mobile communication network (103), said method comprising steps of
- receiving (302) first data, representing a crowdsourcing task, and second data, representing profile requirements, from a customer (101) via a communication means, and receiving (303) third data, representing details of subscribers, from operator networks (103);
- comparing (303) said second data and said third data for determining subscribers (104) that will be target users for said crowdsourcing task;
- sending (304) said first data, representing a crowdsourcing task, to said target users (104), via an operator network (103);
- receiving fourth data (305), representing results from said target users (104);
- assigning ranks (306) to the fourth data, representing results from said target users (104); and sending (306) only the fourth data that are above a predetermined rank, to said customer (101).

**2.** The method, as claimed in claim 1, further comprising the step of sending (307) to an operator network an order, giving to a target user an extra credit added to his/her mobile subscription for using network resources, as per directions of the customer.

**3.** The method, as claimed in claim 1, further comprising the steps of scheduling data transmission in such a manner as to reduce network overhead.

**4.** The method, as claimed in claim 3, wherein some data are transmitted during night.

**5.** The method, as claimed in claim 3, wherein some data are compressed and piggybacked over other real-time user traffic.

**6.** The method, as claimed in claim 1, wherein said customer (101) communicates to said crowdsourcing module (102) using at least one of
Short Message Service (SMS);
Cellular Data Service;
Unstructured Supplementary Service Data (USSD);
Multimedia Messaging Service (MMS);
phone;
Internet;
personally; and
Interactive Voice Response (IVR).

**7.** The method, as claimed in claim 1, wherein said crowdsourcing module (102) communicates with said target users (104) using at least one of
Short Message Service (SMS);
Cellular Data Service;
Unstructured Supplementary Service Data (USSD);
Multimedia Messaging Service (MMS);
phone;
Internet;
personally; and
Interactive Voice Response (IVR).

**8.** A Crowdsourcing Module (102) for distributing crowdsourcing tasks to target users (104) through at least one mobile communication network (103), said crowdsourcing module (102) comprising:
- a communication interface (205) for receiving first data, representing a crowdsourcing task, and second data, representing profile requirements, from a customer (101) via a communication means, and for receiving third data, representing details of subscribers, from operator networks (103);
- means (202) for comparing said second data and said third data for determining subscribers (104) that will be target users for said crowdsourcing task;
- means (204, 205) for sending said first data, representing a crowdsourcing task, to said target users (104), via an operator network (103);
- means (206) for receiving fourth data, representing results from said target users (104);
- and means (206) for assigning ranks to the fourth data, representing results from said target users (104); and sending only the fourth data that are above a predetermined rank, to said customer (101).

**9.** The crowdsourcing module, as claimed in claim 8, further comprising means (206, 207) for sending to an operator network an order, giving to a target user an extra credit added to his/her mobile subscription for using network resources, as per directions of the customer.

**10.** The crowdsourcing module, as claimed in claim 8, further comprising means (205) for scheduling data transmission in such a manner as to reduce network overhead.

**11.** The crowdsourcing module, as claimed in claim 10, wherein the means (205) for scheduling data transmission in such a manner as to reduce network overhead comprise means for transmitting data during night.

**12.** The crowdsourcing module, as claimed in claim 10, wherein the means (205) for scheduling data transmission in such a manner as to reduce network overhead comprise means for compressing data and piggybacking them other real-time user traffic.
